# EUROPÄISCHE PATENTSCHRIFT

(11) **EP 1 604 133 B1**
(45) Veröffentlichungstag und Bekanntmachung des Hinweises auf die Patenterteilung: **22.11.2006**
(21) Anmeldenummer: 05701056.3
(22) Anmeldetag: 20.01.2005
(51) Int. Cl.: F16H 37/08

(54) **GETRIEBEBAUEINHEIT, INSBESONDERE MEHRBEREICHSGETRIEBE**
MODULAR TRANSMISSION UNIT, IN PARTICULAR MULTISTAGE TRANSMISSION
UNITE MODULAIRE DE TRANSMISSION, NOTAMMENT DE TRANSMISSION MULTI-ETAGEE

(30) Priorität: 12.02.2004 DE 102004007130
(43) Veröffentlichungstag der Anmeldung: 14.12.2005
(73) Patentinhaber: Glöckler, Dieter, 89081 Ulm (DE)
(72) Erfinder: Glöckler, Dieter, 89081 Ulm (DE)
(74) Vertreter: Koch-Huld, Annegret Christa
(86) Internationale Anmeldenummer: PCT/EP2005/000507
(87) Internationale Veröffentlichungsnummer: WO 2005/078314

(56) Entgegenhaltungen:
- EP-A- 1 333 194
- DE-A1- 10 202 754
- DE-A1- 19 755 612

## Beschreibung

Die Erfindung betrifft eine Getriebebaueinheit, insbesondere ein Mehrbereichsgetriebe, im einzelnen mit den Merkmalen aus dem Oberbegriff des Anspruches 1.

Getriebeanordnungen in Form von Leistungsverzweigungsgetrieben in Form von Überlagärungsgetrieben sind in einer Vielzahl von Ausführungen bekannt. Stellvertretend wird auf nachfolgende Druckschriften verwiesen:
1. EP 1333194
2. DE 197 55 612 A1

Die Ausführung gemäß der Druckschrift DE 197 55 612 A1 umfasst eine Getriebeeingangswelle, ein mit der Getriebeeingangswelle und mit der Getriebeausgangswelle gekoppeltes stufenloses Übersetzungsgetriebe in Form eines Zugmittelgetriebes, welches einen Eingang und einen Ausgang aufweist, wobei der Eingang mit der Getriebeeingangswelle drehfest verbunden ist, eine feste Übersetzungsstufe sowie ein Überlagerungsgetriebe mit einer ersten Eingangswelle, welche mit dem Ausgang des stufenlosen Übersetzungsgetriebes drehfest verbunden ist. Ferner ist eine zweite Eingangswelle vorgesehen, welche wahlweise mittels einer ersten Kupplung über die feste Übersetzungsstufe mit der Getriebeeingangswelle verbindbar ist und eine Ausgangswelle, welche drehfest mit der Getriebeausgangswelle gekoppelt ist. Hierbei ist die feste Übersetzungsstufe antriebsseitig drehfest mit der Getriebeeingangswelle gekoppelt und bezüglich der festen Übersetzungsstufe abtriebseitig die erste Kupplung derart angeordnet, dass diese wahlweise die zweite Eingangswelle des Überlagerungsgetriebes abtriebseitig mit dem festen Übersetzungsgetriebe verbindet. Mit dieser Lösung ist es möglich, auf einfache Art und Weise ein betriebssicheres Mehrbereichsgetriebe zur Verfügung zu stellen. Diese Lösung bietet den Vorteil, dass bei einem durch Kombination eines stufenlosen Übersetzungsgetriebes mit einem Überlagerungsgetriebe geschaffenen Mehrbereichsgetriebe mit einem sogenannten Geared-Neutral Bereich hohe Eingriffsgeschwindigkeiten im Bereich der ersten Kupplung vermieden werden, da diese an einer Stelle nach einer entsprechenden Übersetzung der hohen Drehzahl der Antriebswelle auf die niedrige Drehzahl durch die feste Übersetzungsstufe angeordnet ist. Dies reduziert den Verschleiß und erhöht die Lebensdauer der ersten Kupplung. Ein wesentlicher Nachteil besteht jedoch in der direkten Kopplung zwischen stufenlosem Getriebe, auch CVT genannt, und Getriebeeingang und damit der Antriebswelle. Das stufenlose Getriebe ist somit immer an die Drehzahl der Antriebsmaschine gekoppelt. Eine Entlastung des Überlagerungsgetriebes in einem Bereich höherer Drehzahlen der Abtriebswelle bzw. niedrigerer Übersetzungsverhältnisse des stufenlosen Übersetzungsgetriebes wird dadurch erzielt, dass eine zweite Kupplung vorgesehen wird, welche wahlweise die erste Eingangswelle mit der Ausgangswelle des Übertagerungsgetriebes verbindet. Dadurch wird eine starre Verbindung zwischen Ausgangswelle des stufenlosen Übersetzungsgetriebes und der Abtriebswelle geschaffen, wodurch das Überlagerungsgetriebe im Drehmomentenfluss überbrückt ist. Ein weiteres wesentliches Problem der Leistungsübertragung über das stufenlose Übersetzungsgetriebe besteht darin, dass dieses aufgrund entsprechender Dimensionierung nur ein maximal zulässiges Moment übertragen kann, ansonsten sind bei sehr hohen Belastungen unzulässige Schlupfzustände zu beobachten, die zu einem erhöhten Verschleiß am Zugmittel führen. Aufgrund der direkten Kopplung des stufenlosen Getriebes an dem Getriebeeingang ist dieser jedoch immer den an diesen vorgesehenen Verhältnissen ausgesetzt. D. h. der Eingang des CVT wird mit der Drehzahl am Getriebeeingang und damit der Antriebsmaschine beaufschlagt.

Ein Mehrbereichsgetriebe ist ferner aus der Druckschrift WO 94/15121 vorbekannt. Dies umfasst ein stufenloses Getriebe in Form eines Zugmittelgetriebes sowie zwei dreiwellige Planetenradsätze, die zu einem vierwelligen Ptanetenradsatz zusammengefasst sind. Auch hier erfolgt die Kopplung der einzelnen Wellen mit dem stufenlosen Getriebe über Verbindungsgetriebe.

Aus der gattungsgemäßen Druckschrift EP 1333194 ist eine Getriebebaueinheit vorbekannt, welche hinsichtlich Ihres Aufbaus derart modifiziert wurde, dass die Belastung des Zugmittelgetriebes erheblich reduziert und damit die Übertragbarkeit hoher Leistungen, insbesondere höherer Leistungen als bei DE 19755612 A1 über dieses gesichert werden konnte. Bei dieser Ausführung ist die Getriebebaueinheit ebenfalls als Überlagerungsgetriebeeinheit ausgeführt. Diese umfasst einen Getriebeeingang und einen Getriebeausgang, ferner zwei zwischen Getriebeeingang und Getriebeausgang angeordnete und miteinander gekoppelte Überlagerungsgetriebe. Jedes der beiden Überlagerungsgetriebe ist dabei als dreiwelliges Planetengetriebe ausgeführt. Beide sind miteinander zu einem vierwelligen Planetengetriebe gekoppelt. Zwischen dem ersten Überlagerungsgetriebe und dem zweiten Überlagerungsgetriebe ist ferner ein stufenloses Getriebe in Form eines Zugmittelgetriebes zwischengeschaltet. Jedes Planetengetriebe umfasst ein Sonnenrad, ein Hohlrad, Planetenräder und einen Steg. Die einzelnen Wellen werden dabei vom Sonnenrad, Hohlrad oder Steg des jeweiligen Überlagerungsgetriebes gebildet. Der Getriebeeingang ist dabei mit einer ersten Welle des ersten Überlagerungsgetriebes und einer ersten Welle des zweiten Überlagerungsgetriebes drehfest verbunden. Der Getriebeausgang ist mit einer zweiten Welle des ersten Überlagerungsgetriebes und einer zweiten Welle des zweiten Überlagerungsgetriebes drehfest verbunden. Die Kopplung der beiden dreiwelligen Planetengetriebe zu einem vierwelligen Planetengetriebe erfolgt dabei durch Kopplung der ersten und zweiten Wellen von ersten und zweiten Überlagerungsgetriebe. Die Anordnung des stufenlosen Getriebes in Form eines Zugmittelgetriebes erfolgt zwischen den dritten Wellen von erstem und zweitern Überlagerungsgetriebe. Der Begriff Welle ist dabei funktional zu verstehen, wobei unter diesem entweder die einzelnen Elemente der Planetengetriebe - Sonnenrad, Hohlrad oder Steg oder die mit diesen drehfest gekoppelten Elemente, beispielsweise in Form von Wellen oder Hohlwellen, zu verstehen sind. Die einzelnen Wellen übernehmen dabei je nach Betriebszustand die Funktion von Eingängen und Ausgängen. So umfasst das erste Überlagerungsgetriebe bei Leistungsübertragung von der Getriebeeingangswelle zur Getriebeausgangswelle über das stufenlose Getriebe einen Eingang und zwei Ausgänge. Der Eingang wird dabei von der ersten Welle gebildet, während der erste Ausgang der mit dem stufenlosen Getriebe wenigstens mittelbar verbunden ist, von der dritten Welle gebildet wird und der zweite, mit der Getriebeausgangswelle drehfest gekoppelte Ausgang von der zweiten Welle. Das zweite Überlagerungsgetriebe umfasst in diesem Betriebszustand einen Eingang und einen Ausgang, wobei der Eingang ebenfalls mit der Getriebeeingangswelle gekoppelt ist und von der ersten Welle des zweiten Überlagerungsgetriebes gebildet wird und der Ausgang von der zweiten Welle. Die dritte Welle ist mit dem stufenlosen Getriebe verbunden. Ferner sind Mittel zurÄnderung des Übersetzungsverhältnisses am Getriebe vorgesehen. Dabei weist eines der beiden Überlagerungsgetriebe - erstes oder zweites Überlagerungsgetriebe - paarweise miteinander kämmende Planetenräder zwischen Sonnenrad und Hohlrad auf. Diese sind am Steg drehbar gelagert. Die paarweise miteinander kämmenden Planetenräder werden auch als doppelläufige Planetenräder bezeichnet. Aufgrund der Ausführung eines der als Planetengetriebe ausgebildeten zweiten Überlagerungsgetriebes mit paarweise miteinander kämmenden Planetenrädern, welche auch als doppelläufige Planetengetriebe bezeichnet werden, wird für den Teilbereich des Gesamtbetriebsbereich garantiert, dass das CVT mit maximaler Umlaufgeschwindigkeit arbeitet, wobei auch ein Wechsel bezüglich des Übersetzungsverhältnisses an den einzelnen Scheiben bei maximaler Motordrehzahl stattfinden kann, d. h. ein über Null-Drehen möglich ist und somit mit dem erfindungsgemäßen Getriebe neben einem Geared-Neutral auch eine Drehrichtungsänderung zu realisieren ist. Die doppelläufige Ausführung bietet den Vorteil, dass bei einer durch diese bedingte Vergrößerung der Drehzahl am mit dem stufenlosen Getriebe gekoppelten Ausgang, insbesondere Hohlrad dieses Planetengetriebes eine entsprechend der Auslegung des anderen Planetengetriebes bedingte Verringerung am mit dem stufenlosen Getriebe gekoppelten Ausgang des jeweils anderen Planetengetriebes, insbesondere Hohlrad bewirkt. Nach dieser Ausführung ist es jedoch nicht möglich, das stufenlose Getriebe über den gesamten Betriebsbereich zweimal mit maximaler Umlaufgeschwindigkeit arbeiten zu lassen.

Der Erfindung liegt daher die Aufgabe zugrunde, eine auf der Grundlage der EP 1333194 A1 beschriebenen Ausführung mit den durch diese erzielten Vorteile verbesserte Getriebeanordnung zur Verfügung zu stellen, wobei die genannten Nachteile aus dem Stand der Technik überwunden werden und auf einfache Art und Weise ein betriebssicheres Mehrbereichsgetriebe auf der Grundlage dieser gattungsgemäßen Ausführung zur Verfügung gestellt werden kann. Insbesondere ist auf eine weitere Reduzierung der Belastung des Zugmittelgetriebes abzustellen.

Die erfindungsgemäße Lösung ist durch die Merkmale des Anspruchs 1 charakterisiert. Vorteilhafte Ausführungen sind in den Unteransprüchen beschrieben.

Gemäß der erfindungsgemäßen Ausführungsform ist die Getriebebaueinheit als Mehrbereichsgetriebe ausgeführt. Diese umfasst einen Getriebeeingang und einen Getriebeausgang, ferner zwei zwischen Getriebeeingang und Getriebeausgang angeordnete und miteinander gekoppelte Überlagerungsgetriebe. Jedes der beiden Überlagerungsgetriebe ist dabei als dreiwelliges Planetengetriebe ausgeführt. Zwischen dem ersten Überlagerungsgetriebe und dem zweiten Überlagerungsgetriebe ist ein stufenloses Getriebe in Form eines Zugmittelgetriebes zwischengeschaltet. Jedes Planetengetriebe umfasst ein Sonnenrad, ein Hohlrad, Planetenräder und einen Steg. Die einzelnen Wellen werden dabei vom Sonnenrad, Hohlrad oder Steg des jeweiligen Überlagerungsgetriebes oder einem drehfest mit diesem gekoppelten Element gebildet. Der Getriebeeingang ist dabei mit einer ersten Welle des ersten Überlagerungsgetriebes drehfest verbunden. Erfindungsgemäß ist zwischen der ersten Welle des zweiten Überlagerungsgetriebes und dem Getriebeeingang eine erste schaltbare Kupplung vorgesehen. Der Getriebeausgang ist mit einer zweiten Welle des zweiten Überfagerungsgetriebes drehfest verbunden und mit einer zweiten Welle des ersten Überlagerungsgetriebes über eine weitere zweite schaltbare Kupplung drehfest verbindbar. Die Anordnung des stufenlosen Getriebes in Form eines Zugmittelgetriebes erfolgt zwischen den dritten Wellen von ersten und zweiten Überlagerungsgetriebe. Der Begriff Welle ist dabei funktional zu verstehen, wobei unter diesen entweder die einzelnen Elemente der Planetengetriebe - Sonnenrad, Hohlrad oder Steg - oder die mit diesen drehfest gekoppelten Elemente, beispielsweise in Form von Wellen oder Hohlwellen, zu verstehen sind.

Die einzelnen Wellen übernehmen dabei je nach Betriebsbereich die Funktion von Eingängen und Ausgängen. So umfasst das erste Überlagerungsgetriebe bei Leistungsübertragung von der Getriebeeingangswelle zur Getriebeausgangswelle über das stufenlose Getriebe einen Eingang und zwei Ausgänge. Der Eingang wird dabei von der ersten Welle gebildet, während der erste Ausgang der mit dem stufenlosen Getriebe wenigstens mittelbar verbunden ist, von der dritten Welle gebildet wird und der zweite, mit der Getriebeausgangswelle drehfest gekoppelte Ausgang von der zweiten Welle. Das zweite Überlagerungsgetriebe umfasst in diesem Betriebszustand einen Eingang und einen Ausgang, wobei der Eingang ebenfalls mit der Getriebeeingangswelle gekoppelt ist und von der ersten Welle des zweiten Überlagerungsgetriebes gebildet wird und der Ausgang von der zweiten Welle. Die dritte Welle ist mit dem stufenlosen Getriebe verbunden. Ferner sind Mittel zur Änderung des Übersetzungsverhältnisses am Getriebe vorgesehen.

Die beiden Planetengetriebe sind zu einem vierwelligen Planetengetriebe gekoppelt. Die Kopplung erfolgt durch die drehfeste Verbindung zwischen der zweiten Welle des ersten Überlagerungsgetriebes und der dritten Welle des zweiten Überlagerungsgetriebes.

Die Kopplung zwischen den Überlagerungsgetrieben und dem stufenlosen Getriebe erfolgt jeweils über Verbindungsgetriebe in Form von Übersetzungsstufen. Im einfachsten Fall erfolgt diese über einen einfachen Stirnradsatz mit gerader Anzahl von Stirnrädern, wobei das jeweilige Eingangsstirnrad dann direkt vom Ausgang des Überlagerungsgetriebes gebildet werden kann. Beide Kupplungen sind schaltbar, die Leistungsübertragung erfolgt dabei in der Regel zuerst durch Schalten der ersten Kupplung und bei Synchronität zwischen der ersten Welle des zweiten Überlagerungsgetriebes und der dritten Welle des zweiten Überlagerungsgetriebes bzw. der zweiten Welle des ersten Überlagerungsgetriebes durch das Schalten der zweiten Kupplung und das Lösen der ersten. Der Kupplungseingriff kann dabei je nach Ausführung der Kupplungen auch überlagernd oder nacheinander erfolgen. Vorzugsweise wird dieser jedoch ohne Zugkraftunterbrechung vorgenommen und bei Synchronität zwischen zweiter und dritter Welle des Überlagerungsgetriebes wird die zweite Kupplung geschaltet. Auch bei dieser Ausführung ist der Eingang des stufenlosen Getriebes in Form des Zugmittelgetriebes nicht an die Drehzahl der Antriebsmaschine gebunden, d. h. es besteht zwischen dem Eingang der Getriebebaueinheit und dem stufenlosen Getriebe keine drehfeste Verbindung. Diese wird lediglich über das erste Überlagerungsgetriebe realisiert. Da dieses zwangsläufig keine Festsetzung einer ihrer Wellen erfahren, ist durch diese kein festes Übersetzungsverhältnis vorgegeben. Das stufenlose Getriebe arbeitet dabei über den gesamten Betriebsbereich mit maximaler Umlaufgeschwindigkeit bei maximaler Motordrehzahl. Durch die beiden schaltbaren Kupplungen und deren wechselweise Betätigung, die eine Überbrückung des zweiten Überlagerungsgetriebes zur Folge hat, wechselt das stufenlose Getriebe über den gesamten Betriebsbereich betrachtet quasi zweimal hinsichtlich der Drehzahl, z. B. in einem Bereich von 2000 U/min bis 4800 U/min. Je nach Auslegung kann hierfür beispielsweise eine Spreizung bis zu einschließlich 2,6 vorgesehen werden.

Entscheidend ist, dass der Kupplungswechsel des zweiten Planetengetriebes ohne Zugkraftunterbrechung erfolgt. Dabei laufen die Getriebeeingangswelle und die dritte Welle des zweiten Überlagerungsgetriebes bzw. die zweite Welle des ersten Überiagerungsgetriebes synchron.

Die Auslegung von Hohlrad und Sonnenrad der beiden Planetenradsätze kann beliebig erfolgen. Diese ist jedoch bei der Gesamtauslegung, insbesondere der Verbindung zwischen den Ausgängen und dem stufenlosen Getriebe mit zu berücksichtigen. Durch die Auslegung des zweiten Überlagerungsgetriebes kann die Gesamtspreizung des Getriebes beeinflusst werden. Dabei wird beispielsweise durch Variation des Sonnenrades, insbesondere von dessen Durchmesser bei gleichbleibender Auslegung des Hohlrades die Gesamtspreizung des Getriebes direkt beeinflusst. Eine Vergrößerung bewirkt eine Erhöhung, eine Verkleinerung eine Verringerung. Die Auslegung des ersten Planetenradsatzes erfolgt in Abhängigkeit der Spreizung am CVT, d. h. die Auslegung von Hohlrad und Sonnenrad erfolgt beispielsweise bei einer mit dem CVT zu erzielenden Spreizung von ca. 2,5 derart, dass das Verhältnis von Sonnenrad zum Hohlrad den mit dem CVT erzielten Verhältnissen entspricht. (Wellen laufen beim Kupplungswechsel synchron). D. h. das Übersetzungsverhältnis zwischen Hohlrad und Sonnenrad beträgt 1 : 2,5. Dies bedeutet, dass das Sonnenrad 2,5 mal schneller dreht als das Hohlrad. Für die konstruktive Auslegung bedeutet dies beispielsweise einen 2,5 mal größeren Verzahnungsdurchmesser des Hohlrades als der Verzahnungsdurchmesser des Sonnenrades.

Gemäß einer besonders vorteilhaften Ausführung werden die ersten Wellen der beiden Überlagerungsgetriebe jeweils vom Steg der einzelnen Überlagerungsgetriebe gebildet. Die zweite Welle des ersten Planetengetriebes wird vom Sonnenrad und die zweite Welle des zweiten Planetengetriebes vom Hohlrad gebildet. Die dritten Wellen, welche wenigstens mittelbar mit dem Zugmittelgetriebe gekoppelt sind, werden vom Hohlrad des ersten Planetengetriebe und dem Sonnenrad des zweiten Planetengetriebes gebildet. Bei Leistungsübertragung über das stufenlose Getriebe vom Getriebeeingang zum Getriebeausgang betrachtet, bildet dabei der Steg des ersten Überlagerungsgetriebes den Eingang des ersten Überlagerungsgetriebes. Der erste Ausgang, welcher mit der Getriebeausgangswelle gekoppelt ist, wird dann vom Sonnenrad und der zweite Ausgang vom Hohlrad des ersten Überlagerungsgetriebes gebildet.

Die erfindungsgemäße Lösung ist dadurch charakterisiert, dass in allen Betriebsbereichen keine direkte drehfeste Kopplung zwischen der Getriebeeingangswelle und dem stufenlosen Getriebe, insbesondere der jeweils als Eingang des stufenlosen Getriebes fungierenden Scheibenanordnung existiert, sondern diese über ein Überlagerungsgetriebe realisiert wird. Damit wird zwar aufgrund der Kopplung zwischen Überlagerungsgetriebe und stufenlosem Getriebe über eine Stufe ein festes Übersetzungsverhältnis erzielt, allerdings sind die einzelnen Größen - Drehzahl und Moment am Eingang des stufenlosen Getriebe immer abhängig von den Verhältnissen am ersten Überlagerungsgetriebe, d.h. bei Leistungsübertragung über das Zugmittelgetriebe hat dessen Größe Einfluss auf die Drehzahl an der Getriebeausgangswelle, wobei diese wiederum in Rückwirkung Einfluss auf das erste Überlagerungsgetriebe ausübt und damit die Höhe der übertragbaren Leistung über das erste Überlagerungsgetriebe und die Drehzahl der dritten Welle des ersten Überlagerungsgetriebes. Dadurch wird erreicht, dass unnötig hohe Belastungen des stufenlosen Getriebes bei höheren Drehzahlen vermieden werden. Der Eingang des stufenlosen Getriebes ist somit nicht mehr direkt an die Drehzahl am Getriebeeingang und damit der mit diesem gekoppelten der Antriebsmaschine gebunden. Die Drehzahl am Getriebeausgang der Getriebebaueinheit kann durch Steuerung des stufenlosen Getriebes verändert werden. Durch die vorgesehene Schaltbarkeit der beiden Kupplungen wird ein Mehrbereichsgetriebe realisiert, das durch die Ausnutzung des Übersetzungsbereiches des stufenlosen Getriebes jeweils in den einzelnen Betriebsbereichen charakterisiert ist. D. h. das stufenlose Getriebe wird in jedem Betriebsbereich in beiden Richtungen durchlaufen. Die Gesamtspreizung des Getriebes erhöht sich dadurch bei gleich oder kleiner dimensioniertem Zugmittelgetriebe.

Das stufenlose Getriebe kann vielgestaltig ausgeführt sein, vorzugsweise ist dieses als kraftschlüssiges Zugmittelgetriebe ausgeführt. Dieses umfasst zwei Scheibenanordnungen, eine erste Scheibenanordnung und eine zweite Scheibenanordnung, wobei die einzelnen Scheiben, vorzugsweise wenigstens eine zur Änderung des Übersetzungsverhältnisses relativ gegeneinander verschiebbar sind. Als Zugmittel finden Riemen, Ketten und Schubgliederbänder Verwendung.

Die Mittel zur Steuerung des Übersetzungsverhältnisses umfassen bei Ausgestaltung des Zugmittelgetriebes mit zwei Scheibenanordnungen, wobei der Abstand der Scheiben einer Scheibenanordnung durch die Anpresskraft der Scheiben einer Scheibenanordnung variierbar ist und diese Größe als direkte Steuergröße oder eine diese wenigstens mittelbar charakterisierende Größe verwendet wird, entsprechende Stelleinrichtungen zur Beaufschlagung der einzelnen Scheiben bzw. zu deren Verschiebung. Diese können beispielsweise elektro-hydraulisch betrieben werden. Dabei kann entweder nur einer Scheibenanordnung eine entsprechende Stelleinrichtung zur aktiven Änderung des Laufradius für das Zugmittel zugeordnet werden, wobei der anderen Scheibenanordnung beispielsweise vorgespannte Federeinrichtungen zugeordnet sind, die entsprechend der Änderung des Abstandes der einzelnen Scheiben und damit des Laufradius an der mittels der Stelleinrichtung aktiv ansteuerbaren Scheibenanordnung eine automatische Anpassung der Anpresskraft und damit der Einstellung des Laufradius ermöglichen. Eine andere Möglichkeit besteht in der Ansteuerung beider Scheibenanordnungen. Bezüglich der konkreten Ausführung bestehen eine Mehrzahl von bereits aus dem Stand der Technik bekannten Möglichkeiten, auf welche daher nicht näher eingegangen werden soll.

Die Funktionsweise der erfindungsgemäßen Getriebeanordnung gestaltet sich dabei wie folgt:

Bei Ankoppelung des Getriebeeinganges an die Antriebsmaschine bzw. bei integrierter Anfahreinheit Ankoppelung des Getriebeeinganges an das erste Überlagerungsgetriebe der Getriebeausgangswelle, d. h. des Abtriebes der Gesamtgetriebeeinheit und geschalteter erster Kupplung, gestalten sich die Verhältnisse am ersten Überlagerungsgetriebe wie bei einem Planetengetriebe mit gegen eine Gegenkraft arbeitende zweiten Welle. Die zweite Kupplung am zweiten Überlagerungsgetriebe ist gelöst. Dementsprechend erfolgt eine Leistungsübertragung über das erste Überlagerungetriebe und ein Übersetzungsgetriebe über mit diesem gekoppelte Scheibenanordnung des Zugmittelgetriebes. Dies gilt in Analogie auch für das zweite Überlagerungsgetriebe, dessen erste Welle, in diesem Fall der Steg mit dem Eingang der Getriebebaueinheit gekoppelt ist. Dies bedeutet, dass in diesem Zustand beide Scheibenanordnungen des stufenlosen Getriebes angetrieben werden. Das erste Überlagerungsgetriebe fungiert somit als Verteilergetriebe, dessen Eingang mit der Getriebeeingangswelle, dessen erster Ausgang mit dem Zugmittelgetriebe und dessen zweiter Ausgang mit der Getriebeausgangswelle für das zweite Überlagerungsgetriebe gekoppelt ist. Die zweite Überlagerungsgetriebeeinheit fungiert in diesem Zustand ebenfalls als Verteilergetriebe, wobei der Eingang mit der Getriebeeingangswelle und des Ausgangs mit der zweiten Scheibenanordnung des stufenlosen Getriebe gekoppelt ist. Das Übersetzungsverhältnis zwischen der ersten Scheibenanordnung und der zweiten Scheibenanordnung wird in diesem Funktionszustand beispielsweise im Verhältnis von 1 zu 2 bis 2,6, insbesondere 1 zu 2,4 gewählt. Der zweite Ausgang des zweiten Überlagerungsgetriebes ist mit dem Ausgang der Getriebebaueinheit drehfest verbunden. Dies bedeutet, dass die zweite mit dem zweiten Übertagerungsgetriebe gekoppelte Scheibenanordnung schneller rotiert als die erste mit dem ersten Überlagerungsgetriebe in Triebverbindung stehende. Erst wenn das Übersetzungsverhältnis am stufenlosen Getriebe verändert wird über die entsprechenden Mittel zur Einstellung des Übersetzungsverhältnisses, d. h. von der Übersetzung zwischen erster und zweiter Scheibenanordnung in Richtung einer Übersetzung ins Langsame umgestellt wird, d. h. beispielsweise von 1 zu 2,4 zu 2,4 zu 1 (Wechsel der Scheiben in der Drehzahl) und damit über die erste Scheibenanordnung ein kleineres Moment übertragen wird, erfolgt die Leistungsübertragung dann im wesentlichen über das erste Überlagerungsgetriebe auf das Zugmittelgetriebe, wobei die über den stufenlosen Teil eingespeiste Leistung dem zweiten Überlagerungsgetriebe zugeführt wird. In diesem Fall fungiert das zweite Überlagerungsgetriebe als Summiergetriebe mit zwei Eingängen, die von der ersten und der dritten Welle gebildet werden. Dementsprechend wird aufgrund des Antriebes des Hohlrades des zweiten Überlagerungsgetriebes und der Rotation des Steges die Getriebeausgangswelle angetrieben. Um einen weiteren Bereich mit quasi rein stufenloser Leistungsübertragung zu realisieren, wird bei Synchronität zwischen der Getriebeeingangswelle und der dritten Welle des zweiten Überlagerungsgetriebes die zweite schaltbare Kupplung geschaltet. Die erste wird dann gelöst. In diesem Fall erfolgt die Leistungsübertragung quasi bei gekoppelten Sonnenrad und Hohlrad ohne zusätzliche Übersetzung am zweiten Überlagerungsgetriebe entsprechend der eingestellten Übersetzung am stufenlosen Getriebe über das erste Überlagerungsgetriebe. Das zweite Überlagerungsgetriebe ist überbrückt. Durch Änderung des Übersetzungsverhältnisses am stufenlosen Getriebe, insbesondere ausgehend von dessen Verbindung zum ersten Überlagerungsgetriebe von langsam in schnell und schnell in langsam wird der mögliche Betriebsbereich des stufenlosen Getriebes somit nochmals zweimal, d. h. je nach Einstellung des Übersetzungsverhältnisses in beiden Richtungen durchfahren. Der Gesamtarbeitsbereich des Getriebes ist somit durch das jeweils zweimalige Durchlaufen des Betriebsbereiches des CVT's in jeden der beiden Arbeitsbereiche, die durch die Schaltung der einzelnen Kupplungen charakterisiert sind, vergrößert. Das CVT selbst kann bei gleichbleibender zu übertragender Leistung über das Gesamtgetriebe kleiner dimensioniert werden.

Die Auslegung der vorgesehenen Übersetzungsstufen zwischen erstem und zweitem Überlagerungsgetriebe und dem stufenlosen Getriebe (CVT) erfolgt entsprechend der maximal zulässigen Drehzahl am CVT.

Für die erfindungsgemäße Lösung wird zusätzlich eine Steuerung vorgesehen, welche das Übersetzungsverhältnis am Zugmittelgetriebe verändert, insbesondere durch Änderung des Abstandes der Scheiben einer Scheibenanordnung zueinander. Diese erfolgt beispielsweise in Abhängigkeit von der Motordrehzahl, der gewünschten Drehzahl an der Getriebeausgangswelle der Gaspedalstellung sowie weiterer Einflussgrößen. Bezüglich der Steuerung bestehen eine Vielzahl von Möglichkeiten, wobei auf herkömmliche zurückgegriffen werden kann.

Zur Drehrichtungsumkehr kann zusätzlich ein Umkehrgetriebe oder eine entsprechende Anordnung vorgesehen werden, die eine Umkehr der Drehrichtung der Getriebeeingangswelle ermöglicht. Ferner ist es jedoch gemäß einem zweiten weiter hinten beschriebenen Lösungsansatz auch möglich, den Spreizungsbereich voll auszunutzen und die Überlagerungsgetriebe über Null zu fahren.

Der erfindungsgemäße Getriebebaueinheit wird ferner eine Anfahreinheit, wie bereits beschrieben, beispielsweise in Form eines hydrodynamischen Wandlers, einer hydrodynamischen Kupplung oder einer mechanischen Kupplung, beispielsweise in Form einer nasslaufenden Lamellenkupplung zugeordnet werden, um nicht bereits im Anfahrzustand die volle Last auf das stufenlose Getriebe zu übertragen.

Gemäß einer besonders vorteilhaften Weiterentwicklung kann sich ergebender Schlupf am stufenlosen Getriebe bei hohen Leistungen durch Mittel zur schlupffreien Kopplung und damit Anpassung der Umlaufgeschwindigkeit am Zugmittel an die Drehzahl der Antriebswelle verhindert werden. Somit kann noch einmal eine Steigerung der Höhe der übertragbaren Leistung erfolgen.

Die Mittel zur schlupffreien Kopplung des Zugmittels an die Drehzahl des Getriebeeingangs umfassen ein, wenigstens mittelbar mit dem Getriebeeingang gekoppeltes und mit dem Zugmittel kraftschlüssig in Wirkverbindung stehendes Übertragungsglied. Das Zugmittel ist am Außenumfang umlaufend mit einer Profilierung versehen die mit einer dazu komplementär ausgeführten Profilierung am Außenumfang des Übertragungsgliedes in Eingriff steht. Eine andere Möglichkeit besteht darin, das Zugmittel als Kette oder aber als Verbund mit einem Riemen und einer Kette auszuführen, wobei dann das Übertragungsglied als Kettenrad ausgebildet ist, d. h., dass die Ausführung fortlaufend durch unveränderte Positionierung des Übertragungsgliedes gegenüber dem Zugmittel erfolgt. Anpassungen des Zugmittels bei Laufradienänderungen bei Verstellung der Scheiben des stufenlosen Getriebes und synchrone Angleichung der Umlaufgeschwindigkeit des Zugmittels an die Drehzahl des Getriebeeinganges werden über gemäß einem ersten Lösungsansatz über eine Spannvorrichtung, insbesondere Spannrolle ausgeglichen. Die Spannrolle ist dabei verschwenkbar gegenüber dem Zugmittel und ortsfest gelagert. Das Übertragungsglied ist dabei wenigstens mittelbar mit dem Getriebeeingang gekoppelt. Dies bedeutet, dass das Übertragungsglied entweder drehfest mit dem Getriebeeingang oder aber über weitere Übertragungselemente mit diesem gekoppelt ist. Zur Gewährleistung einer Rotation des Übertragungsgliedes mit gleichem Drehsinn wie die Laufrichtung des Zugmittels ist dieses entweder direkt drehfest mit der Antriebswelle bzw. dem Getriebeeingang gekoppelt oder über weitere Übertragungselemente beispielsweise Stirnradsatz, wobei die Anzahl der miteinander kämmenden Übertragungselemente dann ungerade ist. Die Übertragungselemente kann man auch verschwenkbar gegenüber dem Zugmittel anordnen. Die dienen dann gleichzeitig als Spannelement und zur schlupffreien Kopplungan die Drehzahl am Getriebeeingang.
Weist die antreibende Riemenscheibe einen kleineren Laufradius auf als die abtriebsseitige, kann die antreibende Riemenscheibe weniger Drehmoment übertragen als die abtriebsseitige. Sobald die Schlupfgrenze der antreibenden Riemenscheibe erreicht ist, wird das darüber hinaus an die abtreibende Riemenscheibe zu übertragende Drehmoment von dem Zahnrad am Riemen und von dort auf die abtreibende Riemenscheibe übertragen.

Gemäß einem zweiten Lösungsansatz erfolgt zur straffen und schlupffreien Führung des Zugmittels der Ausgleich der sich bei unterschiedlicher Verstellung der beiden Scheibenanordnungen, d.h. nicht gleichmäßiger Verstellung ergebenden Abweichungen der Zugmittelumlauflänge von der theoretisch in diesem Zustand zur sicheren Übertragung von Drehmoment erforderlichen Länge durch Verschwenkbarkeit der Scheibenanordnungen um das Übertragungsglied. Dabei werden die auf den mit den Scheibenanordnungen drehfest verbundenen Wellen und die auf diesen gelagerten Elemente - Ausgang der ersten festen Übersetzungsstufe und Eingang der zweiten festen Übersetzungsstufe - mit verschwenkt. Durch diese ist der Verschwenkradius festgelegt. Die Verschwenkung erfolgt dabei immer in Richtung bzw. um das Übertragungsglied in Umfangrichtung.

Bei bestimmten Auslegungen des Getriebes entsprechend eines weiteren Lösungsansatzes ist ein Betrieb über Null möglich. Ansonsten wird zur Drehrichtungsumkehr eine Wendeschaltung vorgesehen.

Die Erfindung wird nachfolgend anhand von Figuren erläutert. Darin ist im einzelnen folgendes dargestellt:
- Figur 1: verdeutlichen eine erfindungsgemäße Ausgestaltung einer Getriebebaueinheit;
- Figur 2: verdeutlicht eine vorteilhafte Weiterentwicklung gemäß Figur 1;
- Figur 3: verdeutlicht eine Ansicht A gemäß Figur 2 auf die Scheibenanordnungen;
- Figur 4: verdeutlicht in schematisch vereinfachter Darstellung anhand einer Ansicht A gemäß Figur 2 eine alternative Ausführung der Mittel zur Angleichung der Umlaufgeschwindigkeit am Zugmittel zur Drehzahl am Getriebeeingang bzw. der Antriebsmaschine;
- Figur 5: verdeutlicht eine alternative Ausführung der Ankoppelung der Überlagerungsgetriebe an das stufenlose Getriebe, welche ein über Null drehen ermöglicht.

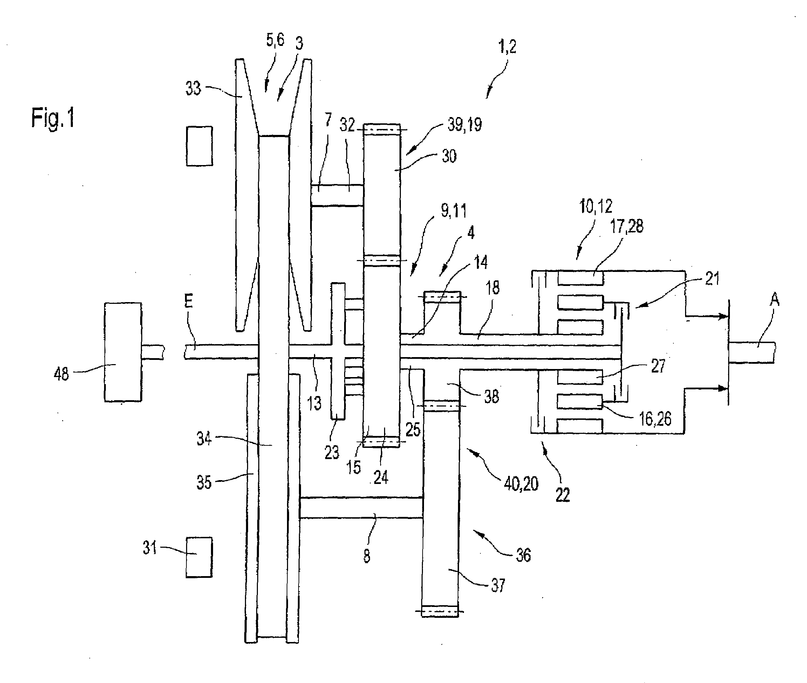

Die Figur 1 verdeutlicht in schematisch vereinfachter Darstellung den Grundaufbau einer erfindungsgemäß gestalteten Getriebebaueinheit 1 in Form einer Überlagerungsgetriebeeinheit, insbesondere in Form eines Mehrbereichsgetriebes 2. Diese umfasst einen Getriebeeingang E und einen Getriebeausgang A. Der Getriebeeingang E ist wenigstens mittelbar mit einer Antriebsmaschine verbunden, während der Ausgang beim Einsatz in Fahrzeugen wenigstens mittelbar drehfest mit den anzutreibenden Rädern des Fahrzeuges koppelbar ist. Die Leistungsübertragung zwischen dem Eingang E und dem Ausgang A erfolgt in den einzelnen Betriebsbreichen, vorzugsweise wenigstens zwei Betriebsbereichen jeweils unter Ausnutzung zweier Leistungszweige, einem ersten Leistungszweig 3 und einem zweiten Leistungszweig 4. Dabei ist erfindungsgemäß im ersten Leistungszweig 3 ein stufenloses Getriebe 5 in Form eines Zugmittelgetriebes 6 vorgesehen, wobei der in wenigstens einem Betriebsbereich als Eingang fungierende Eingang 7 des stufenlosen Getriebes 5 frei von einer direkten Kopplung mit dem Getriebeeingang E und damit der Kopplung mit der Antriebsmaschine ist. Insbesondere ist zwischen dem Getriebeeingang E und dem stufenlosen Getriebe 5 kein festes Übersetzungsverhältnis vorgesehen. Der jeweilige Ausgang 8 des stufenlosen Getriebes 5 ist frei von einer direkten Kopplung mit dem Getriebeausgang A. Zu diesem Zweck sind zwischen dem Getriebeeingang E und dem Getriebeausgang A zwei Überlagerungsgetriebe 9 und 10 vorgesehen. Die beiden Überlagerungsgetriebe - erstes Übertagerungsgetriebe 9 und zweites Überlagerungsgetriebe 10 - sind als dreiwellige Planetengetriebe 11 und 12 ausgeführt. Jedes Planetengetriebe - ein erstes Überlagerungsgetriebe 9 bildendes Planetengetriebe 11 und ein zweites Überlagerungsgetriebe 10 bildende Planetengetriebe 12 - umfassen jeweils eine erste Welle, eine zweite Welle und eine dritte Welle. Für das erste Planetengetriebe 11 ist die erste Welle mit 13, die zweite Welle mit 14 und die dritte Welle mit 15 bezeichnet, während für das zweite Planetengetriebe 12 die erste Welle mit 16, die zweite Welle mit 17 und die dritte Welle mit 18 bezeichnet ist. Die erste Welle 13 des ersten Planetengetriebes 11 ist dabei mit dem Eingang E der Getriebebaueinheit 1 drehfest verbunden bzw. wird von dieser gebildet. Die zweite Welle 14 ist mit dem zweiten Planetengetriebe 12 verbindbar und die dritte Welle 15 ist mit dem stufenlosen Getriebe 5 wenigstens mittelbar, vorzugsweise über ein Verbindungsgetriebe 39, umfassend eine Übersetzungsstufe 19, verbindbar. Dies gilt in Analogie für das zweite Überlagerungsgetriebe 10 in Form des zweiten Planetengetriebes 12. Die erste Welle 16 ist mit dem Eingang E der Getriebebaueinheit 1 verbindbar, wobei die Verbindung im dargestellten Fall über die Verbindung mit der ersten Welle 13 des Überlagerungsgetriebes 9 erfolgt. Die dritte Welle 18 ist wenigstens mittelbar mit dem stufenlosen Getriebe 5 verbindbar. Die Verbindung erfolgt über ein Verbindungsgetriebe 40, umfassend eine Übersetzungsstufe 20. Die Übersetzungsstufen 19 und 20 haben dabei eine feste Übersetzung. Die zweite Welle 17 ist mit dem Ausgang A der Getriebebaueinheit 1 drehfest verbunden. Erfindungsgemäß werden das erste Überlagerungsgetriebe 9 und das zweite Überlagerungsgetriebe 10 in den einzelnen Betriebsbereichen wechselweise als Verteiler- und als Summiergetriebe verwendet. Zur Realisierung der Mehrbereichsarbeitsweise sind dem zweiten Überlagerungsgetriebe 10 zwei schaltbare Kupplungen 21 und 22 zugeordnet, die wahlweise die erste Welle 16 mit dem Eingang E der Getriebebaueinheit 1 bzw. dem ersten Überlagerungsgetriebe 9 verbinden und eine zweite schaltbare Kupplung 22, die wahlweise die dritte Welle 18 mit dem Ausgang A der Getriebebaueinheit 1 und damit den Ausgang A mit dem stufenlosen Getriebe 5 über die zweite Übersetzungsstufe 20 verbindet. Die einzelnen Funktionen von erster Welle, zweiter Welle und dritter Welle der einzelnen Planetengetriebe 11, 12 werden dabei für das erste Planetengetriebe 11 von einem Steg 23, die Funktion der zweiten Welle 14 zur Verbindung mit dem zweiten Überlagerungsgetriebe 10 und über dieses mit dem Ausgang A vom Sonnenrad 25 gebildet. Die dritte Welle 15 wird vom Hohlrad 24 gebildet. Die Funktion der ersten Welle 16 des zweiten Überlagerungsgetriebes 10 wird vom Steg 26, die Funktion der zweiten Welle 17 vom Hohlrad 28 und die Funktion der dritten Welle 18 vom Sonnenrad 27 gebildet. Die erste schaltbare Kupplung 21 dient dabei der Verbindung zwischen dem Steg 26 des zweiten Überlagerungsgetriebes 10 und dem Eingang E der Getriebebaueinheit 1, während die zweite schaltbare Kupplung 22 der Kopplung zwischen dem stufenlosen Getriebe 5, insbesondere der zweiten Übersetzungsstufe 20 und dem Ausgang A der Getriebebaueinheit 1 dient. Das stufenlose Getriebe ist als Zugmittelgetriebe 6 ausgebildet. Dieses umfasst zwei Scheibenanordnungen 33 und 35, die über ein Zugmittel 34 miteinander verbunden sind. Je nach Leistungsübertragungsrichtung fungieren die erste oder zweite Scheibenanordnung 33, 35 als Eingang oder Ausgang des stufenlosen Getriebes 5. Die Funktionsweise gestaltet sich wie folgt:

In einem ersten Betriebsbereich wird die erste Kupplung 21 geschlossen. In diesem Fall besteht eine direkte Verbindung zwischen dem Getriebeeingang E und der ersten Welle 16 des zweiten Überlagerungsgetriebes 10. In diesem Fall fungiert das erste Überlagerungsgetriebe 9 als Verteilergetriebe und das zweite Überlagerungsgetriebe 10 als reines Summiergetriebe. Der Leistungsfluss wird über die erste Welle 16 des zweiten Überlagerungsgetriebes 10, die zweite Übersetzungsstufe 20 und das stufenlose Getriebe 5 geleitet wird, wobei durch Rückwirkung über das erste Überlagerungsgetriebe 9 die Drehzahl am Ausgang A der Getriebebaueinheit über die dritte Welle 18 bestimmt wird. Mit dieser Lösung ist es somit möglich, dass zum einen die vorteilhaften Eigenschaften der aus der in Druckschrift EP 1 333 194 genannten Anordnung beibehalten werden und zusätzlich die Belastung des Zugmittelgetriebes 6 reduziert wird. Dabei wird zwar aufgrund der Kopplung zwischen Überlagerungsgetriebe 9 und stufenlosem Getriebe 5 über eine Stufe 19 ein festes Übersetzungsverhältnis erzielt, allerdings sind die einzelnen Größen - Drehzahl- und Moment - am stufenlosen Getriebe 5 immer abhängig von den Verhältnissen am ersten Überlagerungsgetriebe 9 und der Schaltung der einzelnen Kupplungen 21, 22. D. h. bei Leistungsübertragung über das Zugmittelgetriebe 6 hat die Größe der dort eingestellten und erzielten Drehzahlen Einfluss auf die Drehzahl an der Getriebeausgangswelle A, wobei diese wiederum in Rückwirkung Einfluss auf das erste Überlagerungsgetriebe 9 ausübt und damit die Höhe der übertragbaren Leistung über das erste Überfagerungsgetriebe 9 und die Drehzahl der dritten Welle 15 des ersten Überlagerungsgetriebes 9. Dadurch wird erreicht, dass unnötig hohe Belastungen des stufenlosen Getriebes 5 bei höheren Drehzahlen vermieden werden. Der Eingang des stufenlosen Getriebes 5 ist somit nicht mehr direkt an die Drehzahl der Antriebsmaschine gekoppelt. Die Drehzahl am Ausgang kann durch Steuerung des stufenlosen Getriebes 5 verändert werden. Die Kopplung jeweils zwischen den einzelnen Scheibenanordnungen 33, 35 des stufenlosen Getriebes 5 mit den Überlagerungsgetrieben 9, 10 erfolgt über entsprechende Verbindungsgetriebe 39, 40 mit festen Übersetzungsstufen 19, 20. Die Mittel 31 zur Steuerung des Übersetzungsverhältnisses 33, 35 selbst an den Scheibenanordnungen umfassen bei Ausgestaltungen des Zugmittelgetriebes 6 mit zwei Scheibenanordnungen 33, 35, wobei der Abstand der Scheiben einer Scheibenanordnung 33, 35 durch die Anpresskraft der Scheiben variierbar ist und diese Größe als direkte Steuergröße oder eine diese wenigstens mittelbar charakterisierende Größe verwendet wird, eine entsprechende Stelleinrichtung zur Variation der Anpresskraft, d. h. Stelleinrichtungen zur Beaufschlagung der einzelnen Scheiben bzw. zu deren Verschiebung. Diese können beispielsweise elektro-hydraulisch betrieben werden. Dabei kann entweder nur einer Scheibenanordnung 33 oder 35 eine entsprechende Stelleinrichtung zur aktiven Änderung des Laufradius für das Zugmittel zugeordnet werden, wobei der anderen Scheibenanordnung 33 oder 35 beispielsweise vorgespannte Federeinrichtungen zugeordnet sind, die entsprechende Änderung des Abstandes der einzelnen Scheiben und damit des Laufradius an der mittels der Stelleinrichtung aktiv ansteuerbaren Scheibenanordnung 33 bzw. 35 eine automatische Anpassung der Anpresskraft und damit der Einstellung des Laufrades ermöglichen. Eine andere Möglichkeit besteht in der Ansteuerung beider Scheibenanordnungen, hier die Scheibenanordnungen 33 und 35. Bezüglich der konkreten Ausführung bestehen eine Mehrzahl von bereits aus dem Stand der Technik hinlänglich bekannter Möglichkeiten, auf welche daher nicht noch einmal eingegangen werden soll. Dies gilt ferner für die Verfahren zur Ansteuerung selbst und die Festlegung der Steuer-Regel- und Führungsgrößen für den Betrieb des Zugmittelgetriebes sowie die Einbindung dessen in bestehende Antriebskonzepte. Bezüglich der Ausführung des stufenlosen Getriebes 5 bestehen eine Vielzahl von Möglichkeiten. Die Kopplung der beiden Scheibenanordnungen 33 und 35 und die Kraftübertragung erfolgt jeweils über ein Zugmittel 34, beispielsweise in Form eines Riemens, einer Kette oder Schubgliederbandes.

In einem zweiten Betriebsbereich II ist die erste Kupplung 21 zwischen dem stufenlosen Getriebe und dem Getriebeausgang A deaktiviert und die zweite Kupplung 22 geschlossen. In diesem Fall besteht zwischen dem Getriebeausgang A mit der dritten Welle 18 des zweiten Überlagerungsgetriebes 10 und damit der festen Übersetzungsstufe 20 eine drehfeste Verbindung, wobei diese ferner mit der zweiten Welle 14 des ersten Überlagerungsgetriebes 9 verbunden ist. Dabei sind Hohlrad 28 und Sonnenrad 27 des zweiten Überlagerungsgetriebes 10 miteinander gekoppelt. Damit wird der Übersetzungsbereich des stufenlosen Getriebes 5 ein weiteres Mal genutzt, um eine höhere Getriebespreizung zu realisieren, wobei die Belastung des stufenlosen Getriebes reduziert wird. Die Leistungsübertragung erfolgt dabei vom Getriebeeingang E über das erste Überlagerungsgetriebe 9 über die erste Übersetzungsstufe 19 auf das stufenlose Getriebe 5. Im dargestellten Fall ist die erste Übersetzungsstufe 19 als Stirnradstufe ausgeführt, wobei das erste Stirnrad 29 vom Hohlrad 24 des ersten Überlagerungsgetriebes 9 gebildet wird, während das zweite mit diesem kämmende Stirnrad 30 mit dem in diesem Funktionszustand als Eingang 7 des stufenlosen Getriebe fungierenden Welle 32 oder einem drehfest mit der ersten Scheibenanordnung 33 gekoppelten Elementes des stufenlosen Getriebes 5 verbunden ist. Die Leistungsübertragung erfolgt über das Zugmittel 34 auf eine zweite Scheibenanordnung 35, die wiederum über die zweite Übersetzungsstufe 20 in Form eines Stimradsatzes 36 mit der dritten Welle 18 des Überlagerungsgetriebes 10 verbunden ist. Der Stirnradsatz 36 umfasst auch hier zwei Stimräder, wobei das erste Stirnrad 37 mit der zweiten Scheibenanordnung 35 verbunden ist, während das zweite Stirnrad 38 mit der dritten Welle 18 des zweiten Überlagerungsgetriebes 10 verbunden ist. Auch in diesem Funktionszustand erfolgt eine Verstellung des Abstandes der Scheiben der ersten und zweiten Scheibenanordnung 33 und 35 jeweils zur Erzielung der gewünschten Übersetzungsverhältnisse.

Durch die Kopplung zwischen Sonnen- und Hohlrad 27 bzw. 28 läuft das zweite Überlagerungsgetriebe 10 mit einer Übersetzung von 1 : 1. Die Übersetzung des Gesamtgetriebes wird in diesem Betriebsbereich hauptsächlich über das stufenlose Getriebe 5 bestimmt. Dabei erfolgt an diesem eine Änderung des Übersetzungsverhältnisses entsprechend der Ansteuerung der einzelnen Scheibenanordnungen. Auch hier wird der mögliche Arbeitsbereich des stufenlosen Getriebes durch entsprechende Verstellung der Scheiben genutzt. Diese erfolgt beispielsweise ausgehend von der mit dem ersten Überlagerungsgetriebe gekoppelten Scheibenanordnung jeweils ins Schnelle und dann von schnell in langsam.

Das Getriebe 1 wird vorzugsweise über eine Anfahreinheit 48 an den Abtrieb bzw. die Antriebsmaschine angekoppelt.

Erstes Überlagerungsgetriebe 9 und zweites Überlagerungsgetriebe 10 sind wie bereits beschrieben als Umlaufrädergetriebe in Form von Planetenradgetrieben 11 und 12 ausgeführt. Diese umfassen jeweils wenigstens ein Sonnenrad 25, ein Hohlrad 24 sowie einen Steg 23 und Planetenräder. Dabei sind das Sonnenrad 25 und das Hohlrad 24 über einfache Planetenräder miteinander verbunden. Dies gilt in Analogie auch für das zweite Planetengetriebe 12.

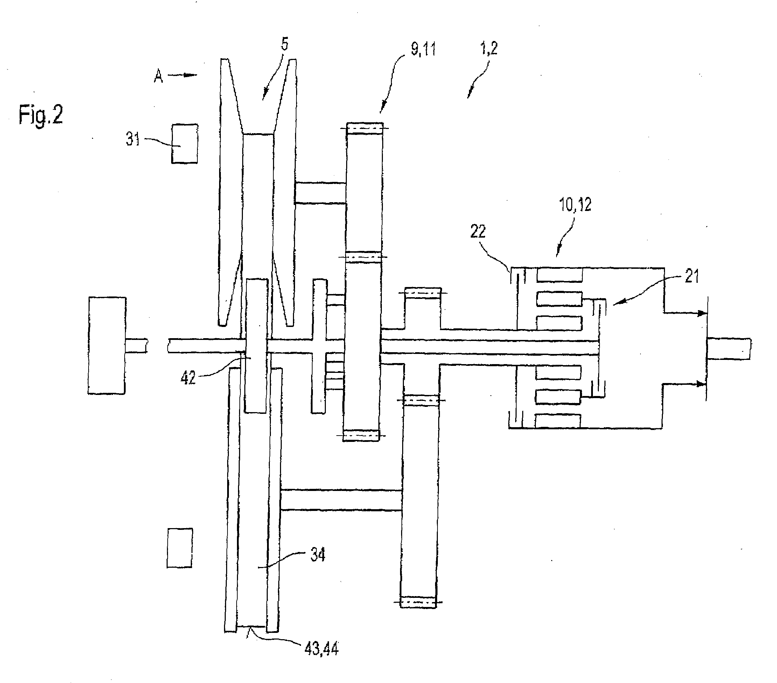

Die Figur 2 verdeutlicht anhand einer Ausführung gemäß Figur 1 eine besonders vorteilhafte Weiterentwicklung der erfindungsgemäß gestalteten Getriebebaueinheit 1 zur Realisierung der Übertragung hoher Momente in Form eines Mehrbereichsgetriebes 2. Der Grundaufbau entspricht dabei dem in der Figur 1 beschriebenen, weshalb für gleiche Elemente die gleichen Bezugszeichen verwendet werden. Das stufenlose Getriebe 5 ist ebenfalls als kraftschlüssiges Zugmittelgetriebe 6 ausgebildet. Erfindungsgemäß ist das Zugmittel 34 am Außenumfang 43 mit einer Profilierung 44 versehen, die einen Eingriff eines wenigstens mittelbar drehfest mit dem Getriebeeingang E gekoppelten Übertragungsgliedes 42 mit entsprechend zur Profilierung 44 komplementär ausgebildeter Profilierung 45 erlaubt und somit eine synchrone Angleichung der Umlaufgeschwindigkeit des Zugmittels 34 an den Getriebeeingang E bei jedem beliebigen Übersetzungsverhältnis zwischen Getriebeeingang E und Getriebeausgang A ermöglicht. Diese Maßnahme bietet den Vorteil, dass bei gleicher Dimensionierung des Zugmittelgetriebes das mehrfache an Leistung, beispielsweise ca. dreimal mehr Leistung als ohne diese Maßnahme übertragen werden kann. Schlupfzustände am Zugmittelgetriebe werden vermieden. Als Übertragungsglied 42 finden entsprechend der Auswahl des Zugmittels Zahn- oder Kettenräder Verwendung. Die Drumlängenänderungen werden über eine, hier nicht dargestellte Spannvorrichtung ausgeglichen, beispielsweise eine Spannrolle 47. Das Zahnrad verhindert den Schlupf auf dem kleinen Laufradius des CVT. Beide Scheibenanordnungen übertragen Momente (großer und kleiner Laufradius).

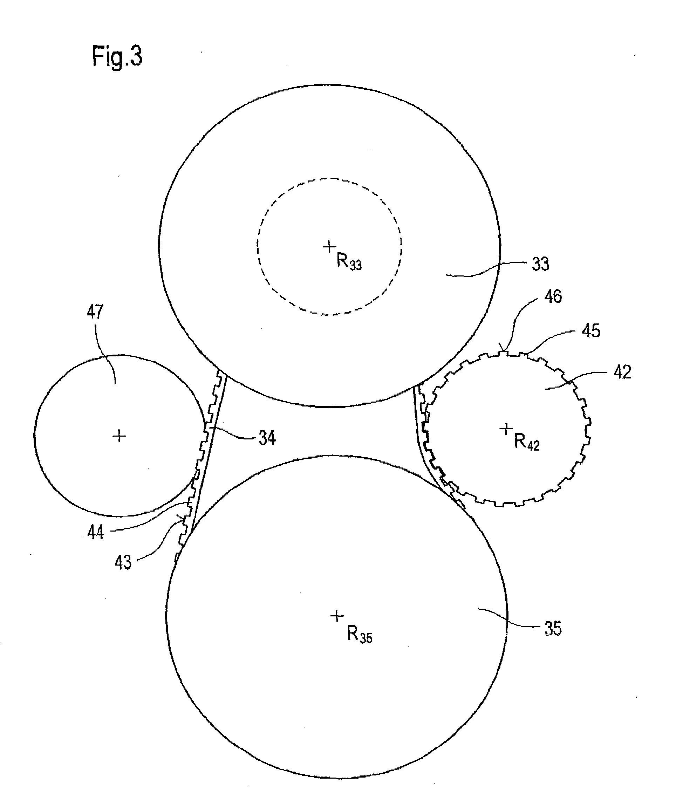

Die Figur 3 verdeutlicht in schematisch stark vereinfachter Darstellung eine Ansicht A gemäß Figur 2 auf das Zugmittelgetriebe, welches in einer Ebene parallel zur Antriebswelle E angeordnet ist. Daraus wird ersichtlich, dass das Zugmittel 34 am Außenumfang 43 beispielsweise Profilierungen 44 aufweist. Diese kann in das Zugmittel eingearbeitet oder aber durch entsprechende Ausgestaltung, beispielsweise der Ausbildung des Zugmittels aus mehreren Schichten gebildet werden. Vorzugsweise ist das Zugmittel als Zahnriemen ausgeführt. Das Übertragungsglied 42 ist als Zahnrad ausgebildet und weist an seinem Außenumfang 46 eine entsprechend komplementäre Profilierung 45 auf, welche es ermöglicht, mit dem Zugmittel in Eingriff zu stehen und kraftschlüssig mit diesem zusammenzuwirken. Denkbar ist jedoch auch eine Ausbildung als Kette. In diesem Fall ist das Übertragungsglied 42 dann als Kettenrad ausgeführt.

Das Übertragungsglied 42 ist vorzugsweise drehfest mit dem als Antriebswelle fungierenden Getriebeeingang E verbunden und ermöglicht in Verbindung mit einer Spannvorrichtung 47 eine synchrone Angleichung der Umlaufgeschwindigkeit des Zugmittels an die Drehzahl der Antriebsmaschine bzw. den Getriebeeingang E. Ein Rutschen des Zugmittels wird dadurch vermieden. Denkbar sind jedoch auch Ausführungen der Mittel zur schlupffreien Kopplung an die Drehzahl der Antriebswelle mit einer Mehrzahl von miteinander in Eingriff stehenden Übertragungselementen, wobei immer eine entsprechende Übersetzung zu wählen ist, vorzugsweise eine ungerade, um die Gleichheit des Drehsinns zwischen Getriebeeingang und Laufrichtung des Zugmittels zu gewährleisten. Der Eingriff erfolgt dabei immer fortlaufend. Die Übertragungselemente kann man auch verschwenkbar anlegen. Sie dienen dann gleichzeitig als Spannelement zur synchronen Kopplung des Zugmittels an den Getriebeeingang.

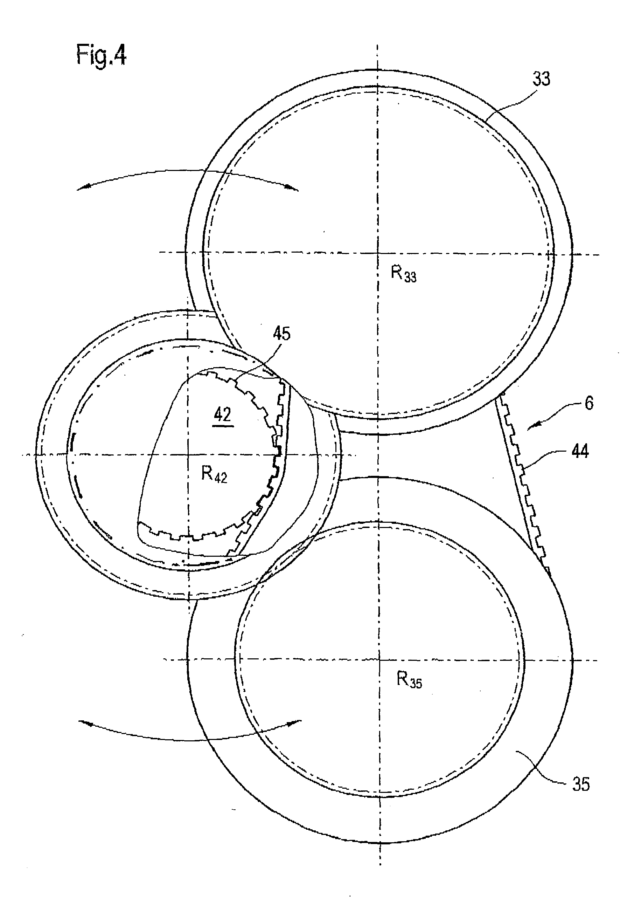

Die Figur 4 verdeutlicht in einer Ansicht A gemäß Figur 2 eine weitere Ausführungsmöglichkeit zur Realisierung der Spannung am Zugmittel und Angleichung der Umlaufgeschwindigkeit des Zugmittels an die Drehzahl des Übertragungsgliedes 42. Das Zugmittel ist ebenfalls mit einer, hier im einzelnen nicht dargestellten Profilierung 44 versehen, welche mit einer dazu komplementären Profilierung 45 am Übertragungsglied 42 im Eingriff steht. Das Übertragungsglied 42 ist drehfest mit der Antriebswelle bzw. dem Getriebeeingang E verbunden und ermöglicht die synchrone Angleichung der Umlaufgeschwindigkeit des Zugmittels an die Drehzahl der Antriebswelle bzw. des Getriebeeingangs E. Zur Realisierung der zur Leistungsübertragung erforderlichen Spannung am Zugmittel bei Verstellung mindestens einer der Scheibenanordnungen oder beider werden diese in Umlaufrichtung verschwenkt. Die Verschwenkung erfolgt bezogen auf die Rotationsachse R₄₂ des Übertragungsgliedes auf einem Radius, der durch den Abstand zwischen Rotationsachse R₄₂ und der Rotationsachsen R₃₃, R₃₅ der einzelnen Scheibenanordnungen 33, 35 bestimmt wird. Zur Realisierung ist beispielsweise ein Verschwenkgetriebe vorgesehen, welches als Stirnradstufe aufgebaut ist und zwei koaxial zu den Scheibenanordnungen angeordnete Stirnräder umfasst, die mit einem koaxial zum Übertragungsglied 42 angeordneten Stirnrad kämmen. Das Stirnrad ist hinsichtlich seiner Rotationsachse ortsfest gelagert. Die Verstellung bzw. das Verschwenken erfolgt dabei vorzugsweise synchron zur Verstellung der Abstände an den einzelnen Scheibenanordnungen. Dadurch werden die Abstände zwischen den Rotationsachsen R₃₃, R₃₅ in radialer Richtung geändert.

Bei den in den Figuren 1 bis 4 dargestellten-Ausführungen handelt es sich um ein Mehrbereichsgetriebe. Eine gegenüber den Ausführungen in den Figuren 1 bis 4 geringere Getriebespreizung kann jedoch auch für einen einzelnen Betriebsbereich bereits erzielt werden, indem auf das zweite Überlagerungsgetriebe verzichtet wird. Der Grundaufbau der Getriebebaueinheit gestaltet sich dabei wie in der Figur 1 beschrieben, jedoch ohne zweites Überlagerungsgetriebe.

Bei den in den Figuren 1 bis 4 beschriebenen Ausführungen erfolgt die Dimensionierung der Überlagerungsgetriebe, insbesondere des ersten Überlagerungsgetriebes entsprechend der sich einstellenden Verhältnisse an der Scheibenanordnung. Dies bedeutet, wenn beispielsweise ein maximales Übersetzungsverhältnis von 1 zu 2,5 im stufenlosen Getriebe erzielbar ist, wird das erste Überlagerungsgetriebe, insbesondere die Auslegung von Sonnenrad und Hohlrad ebenfalls entsprechend diesen Vorgaben erfolgen. Dies bedeutet im Einzelnen, dass das Hohlrad 2,5 mal langsamer dreht als das Sonnenrad.

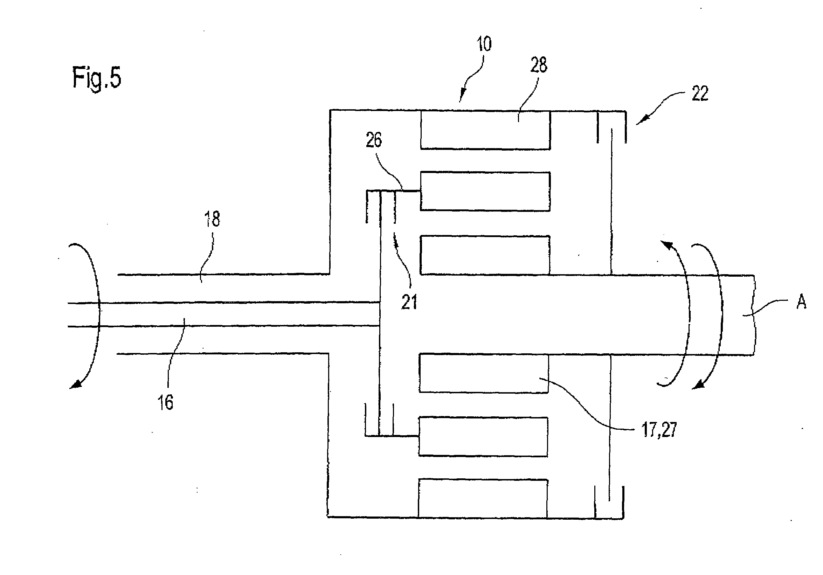

Um auch einen Betrieb über Null realisieren zu können, erfolgt gemäß Figur 5 entsprechend eines weiteren zweiten Lösungsansatzes die Ausführung des zweiten Überlagerungsgetriebes in anderer Weise. In diesem Fall wird die erste Welle 16 des zweiten Überlagerungsgetriebes 10 vom Steg 26 gebildet, welche über eine erste Kupplung 21 mit dem Getriebeeingang E verbindbar ist. Allerdings wird die zweite Welle vom Sonnenrad 27 gebildet, während die dritte Welle, die auch mit dem stufenlosen Getriebe verbindbar ist und mit 18 bezeichnet wird, mit dem Hohlrad 28 gekoppelt ist. Die dritte Welle 18 ist über die zweite Kupplungseinrichtung 22 drehfest mit dem Ausgang A verbindbar. In diesem Fall werden Hohlrad 28 und Sonnenrad 27 drehfest aneinander gekoppelt.

### Bezugszeichenliste

- 1: Getriebebaueinheit
- 2: Mehrbereichsgetriebe
- 3: erster Leistungszweig
- 4: zweiter Leistungszweig
- 5: stufenloses Getriebe
- 6: Zugmittelgetriebe
- 7: Eingang des stufenlosen Getriebes
- 8: Ausgang des stufenlosen Getriebes
- 9: erstes Überlagerungsgetriebe
- 10: zweites Überlagerungsgetriebe
- 11: dreiwelliges Planetengetriebe
- 12: dreiwelliges Planetengetriebe
- 13: erste Welle
- 14: zweite Welle
- 15: dritte Welle
- 16: erste Welle
- 17: zweite Welle
- 18: dritte Welle
- 19: Übersetzungsstufe
- 20: Übersetzungsstufe
- 21: erste schaltbare Kupplung
- 22: zweite schaltbare Kupplung
- 23: Steg des Planetengetriebes 11
- 24: Hohlrad des Planetengetriebes 11
- 25: Sonnenrad des Planetengetriebes 11
- 26: Steg des Planetengetriebes 12
- 27: Sonnenrad des Planetengetriebes 12
- 28: Hohlrad des Planetengetriebes 12
- 29: erstes Stirnrad
- 30: zweites Stirnrad
- 31: Mittel zur Steuerung des Übersetzungsverhältnisses
- 32: Welle
- 33: erste Scheibenanordnung
- 34: Zugmittel
- 35: zweite Scheibenanordnung
- 36: Stirnritze
- 37: erstes Stirnrad
- 38: zweites Stirnrad
- 39: Verbindungsgetriebe
- 40: Verbindungsgetriebe
- 41: Mittel
- 42: Übertragungsglied
- 43: Außenumfang
- 44: Profilierung
- 45: Profilierung
- 46: Profilierung
- 47: Spannvorrichtung
- 48: Anfahreinheit
- E: Eingang
- A: Ausgang

## Patentansprüche

1. Getriebebaueinheit (1), insbesondere Mehrbereichsgetriebe (2)
1.1 mit einem Getriebeeingang (E) und einem Getriebeausgang (A);
1.2 mit zwei als dreiwellige Planetengetriebe (11, 12) ausgeführten Überlagerungsgetrieben (9, 10), umfassend jeweils ein Sonnenrad (25, 27), ein Hohlrad (24, 28), einen Steg (23, 26) und Planetenräder, wobei die einzelnen Wellen jeweils von den Sonnenrädern (25, 27), Hohlrädern (24, 28), Stegen (23, 26) oder den mit diesen drehfest verbundenen Elementen gebildet werden;
1.3 eine erste Welle (13) des ersten Überlagerungsgetriebes (9) ist drehfest mit dem Getriebeeingang (E) verbunden;
1.4 eine zweite Welle (14) des ersten Überlagerungsgetriebes (9) und eine zweite Welle (17) des zweiten Überlagerungsgetriebes (10) sind wenigstens mittelbar drehfest mit dem Getriebeausgang (A) verbindbar;
1.5 zwischen den dritten Wellen (15, 18) von erstem und zweitem Überlagerungsgetriebe (9, 10) ist ein stufenloses Getriebe (5) in Form eines Zugmittelgetriebes (6) angeordnet;
1.6 mit Mitteln zu Steuerung des Übersetzungsverhältnisses am Zugmittelgetriebe (6);
1.7 die Kopplung zwischen den einzelnen Überlagerungsgetrieben (9, 10) und dem stufenlosen Getriebe (5) erfolgt jeweils über ein Verbindungsgetriebe (39, 40), umfassend eine Übersetzungsstufe (19, 20);
**gekennzeichnet durch** die folgenden Merkmale:
1.8 die erste Welle (16) des zweiten Überlagerungsgetriebes (10) ist über eine erste Schaltkupplung (21) wahlweise mit dem Getriebeeingang (E) verbindbar;
1.9 die zweite Welle (14) des ersten Überlagerungsgetriebes (9) und die dritte Welle (18) des zweiten Überlagerungsgetriebes (10) sind über wenigstens eine weitere zweite schaltbare Kupplung (22) mit dem Getriebeausgang (A) wahlweise verbindbar.

2. Getriebebaueinheit (1) nach Anspruch 1, **dadurch gekennzeichnet, dass** die zweite Welle (14) des ersten Überlagerungsgetriebes (9) mit der dritten Welle (18) des zweiten Überlagerungsgetriebes (10) drehfest verbunden ist.

3. Getriebebaueinheit (1) nach einem der Ansprüche 1 oder 2, **dadurch gekennzeichnet, dass** das einzelne Verbindungsgetriebe (19, 20) von einem Umkehrgetriebe gebildet werden.

4. Getriebebaueinheit (1) nach Anspruch 3, **dadurch gekennzeichnet, dass** das einzelne Verbindungsgetriebe (19, 20) von einer Stirnradstufe (36) gebildet wird, umfassend eine gerade Anzahl von miteinander kämmenden Stirnrädern (29, 30, 37, 38).

5. Getriebebaueinheit (1) nach Anspruch 4, **dadurch gekennzeichnet, dass** eines der miteinander kämmenden Stirnräder (29, 30, 37, 38) der einzelnen Verbindungsgetriebe (19, 20) von der dritten Welle (15) des ersten Überlagerungsgetriebes (9) und/oder der dritten Welle (18) des zweiten Überlagerungsgetriebes (10) gebildet wird bzw. mit diesen eine bauliche Einheit bilden.

6. Getriebebaueinheit (1) nach einem der Ansprüche 1 bis 5, **dadurch gekennzeichnet, dass** das Sonnenrad (27) des zweiten Überlagerungsgetriebes (10) in Abhängigkeit der zu erzielenden Gesamtgetriebespreizung angelegt ist.

7. Getriebebaueinheit (1) nach einem der Ansprüche 1 bis 6, **dadurch gekennzeichnet, dass** das erste Überlagerungsgetriebes (9) mit der Übersetzung des stufenlosen Getriebes (5) ausgelegt wird, die dem theoretisch maximal möglichen Übersetzungsverhältnis am stufenlosen Getriebe entspricht.

8. Getriebebaueinheit (1) nach einem der Ansprüche 1 bis 7, **dadurch gekennzeichnet, dass** das Sonnenrad (25) des ersten Überlagerungsgetriebes (9) hinsichtlich seiner Dimensionierung durch einen in einem Bereich von einschließlich 2 bis 2,6 mal kleineren Teilkreisdurchmesser als der des Hohlrades (24) des ersten Überlagerungsgetriebes (9) charakterisiert ist.

9. Getriebebaueinheit (1) nach einem der Ansprüche 1 bis 8, **dadurch gekennzeichnet, dass** das Sonnenrad (27) des zweiten Überlagerungsgetriebes (10) hinsichtlich seiner Dimensionierung durch einen in einem Bereich von einschließlich 2 bis 2,6 mal kleineren Teilkreisdurchmesser als der des Hohlrades (28) charakterisiert ist.

10. Getriebebaueinheit (1) nach einem der Ansprüche 1 bis 9, **gekennzeichnet durch** die folgenden Merkmale:
10.1 die erste Welle (13) des ersten Überlagerungsgetriebes (9) und die erste Welle (16) des zweiten Überlagerungsgetriebes (10) werden jeweils vom Steg (23) des ersten Planetengetriebes (11) bzw. vom Steg (26) des zweiten Planetengetriebes (12) oder drehfest mit diesen gekoppelten Elementen gebildet;
10.2 die zweite Welle (14) des ersten Überlagerungsgetriebes (9) wird vom Sonnenrad (25) des ersten Planetengetriebes (11) und die zweite Welle (17) des zweiten Überlagerungsgetriebes (10) wird vom Hohlrad (28) des zweiten Planetengetriebes (12) gebildet;
10.3 die dritte Welle (15) des ersten Überlagerungsgetriebes (9) wird vom Hohlrad (24) des ersten Planetengetriebes (11) und die dritte Welle (18) des zweiten Planetengetriebes (12) wird vom Sonnenrad (27) oder einem drehfest mit diesem gekoppelten Element gebildet.

11. Getriebebaueinheit (1) nach Anspruch 10, **dadurch gekennzeichnet, dass** das Sonnenrad (25) des ersten Planetengetriebes (11) und das Sonnenrad (27) des zweiten Planetenradgetriebes (12) über eine Hohlwelle miteinander drehfest verbunden sind.

12. Getriebebaueinheit (1) nach Anspruch 11, **dadurch gekennzeichnet, dass** die Kopplung zwischen Getriebeeingang (E) und erster Welle (16) des zweiten Überlagerungsgetriebes (10) über eine drehfest mit dem Steg (23) des ersten Planetengetriebes (11) und durch die Hohlwelle geführte Welle erfolgt.

13. Getriebebaueinheit (1) nach einem der Ansprüche 10 bis 12, **gekennzeichnet durch** die folgenden Merkmale:
13.1 das erste Stirnrad des ersten Verbindungsgetriebes wird vom Hohlrad (24) des ersten Überlagerungsgetriebes (9) gebildet;
13.2 das zweite Verbindungsgetriebe (20) wird von einem drehfest mit der als Hohlwelle angeführten dritten Welle (18) gekoppelten Stirnrad (38) und einem weiteren Stirnrad (37), welches mit dem stufenlosen Getriebe (5) drehfest verbunden ist, gebildet.

14. Getriebebaueinheit (1) nach einem der Ansprüche 1 bis 13, **dadurch gekennzeichnet, dass** das stufenlose Getriebe (5) als kraftschlüssiges Zugmittelgetriebe (6) ausgeführt ist und das Zugmittel (34) von einem Riemen oder einer Kette gebildet wird.

15. Getriebebaueinheit (1) nach einem der Ansprüche 1 bis 14, **dadurch gekennzeichnet, dass** Mittel zur schlupffreien Kopplung des Zugmittels (34) an die Drehzahl des Getriebeeingangs (E) vorgesehen sind.

16. Getriebebaueinheit (1) nach Anspruch 15, **dadurch gekennzeichnet, dass** die Mittel zur Angleichung der Umlaufgeschwindigkeit des Zugmittels (34) an die Drehzahl des Getriebeeingangs (E) ein, wenigstens mittelbar mit dem Getriebeeingang (E) gekoppeltes und mit dem Zugmittel (34) kraftschlüssig in Wirkverbindung bringbares Übertragungsglied (42) umfassen.

17. Getriebebaueinheit (1) nach Anspruch 16, **dadurch gekennzeichnet, dass** das Zugmittel (34) am Außenumfang (43) umlaufend eine Profilierung (44) aufweist, die mit einer dazu komplementär ausgeführten Profilierung (45) am Außenumfang (46) des Übertragungsgliedes (42) in Eingriff bringbar ist.

18. Getriebebaueinheit (1) nach Anspruch 17, **dadurch gekennzeichnet, dass** das Übertragungsglied (42) koaxial zur Getriebeeingangswelle (E) oder parallel zu dieser angeordnet ist und zur Aufrechterhaltung der Spannung im Zugmittel (34) ein Verschwenkgetriebe (48) zur Verschwenkung der Scheibenanordnungen (33, 35) des stufenlosen Getriebes (5) und das Übertragungsglied (42) vorgesehen ist.

19. Getriebebaueinheit (1) nach Anspruch 17, **dadurch gekennzeichnet, dass** das Übertragungsglied (42) koaxial zu und drehfest mit der Getriebeeingangswelle (E) oder parallel zu dieser angeordnet ist und dem Zugmittel (34) zur Aufrechterhaltung der Spannung eine verschieb- oder verschwenkbar gelagerte Spannvorrichtung (47) zugeordnet ist.

20. Getriebebaueinheit (1) nach einem der Ansprüche 1 bis 19, **dadurch gekennzeichnet, dass** die Mittel zur Steuerung des Übersetzungsverhältnisses am Zugmittelgetriebe (6) Stellglieder zum Verstellen der Abstände der einzelnen Scheibenanordnungen (33, 35) umfassen.

21. Getriebebaueinheit (1) nach einem der Ansprüche 1 bis 20, **dadurch gekennzeichnet, dass** zwischen der dritten Welle des ersten Überlagerungsgetriebes (9) und der dritten Welle (18) des zweiten Übertagerungsgetriebes (10) eine Übersetzung von 1 zu 2 bis 3, vorzugsweise 1 zu 2,5 einstellbar ist, bzw. die Übersetzung zwischen den beiden einzelnen Scheibenanordnungen im Verhältnis von 1 zu 2 bis 3 einstellbar ist.

22. Getriebebaueinheit (1) noch einem der Ansprüche 1 bis 21, **dadurch gekennzeichnet, dass** der Eingang (E) mit einer schaltbaren Anfahreinheit (48) verbunden ist.

23. Getriebebaueinheit (1) nach einem der Ansprüche 1 bis 22, **dadurch gekennzeichnet, dass** zusätzlich Mittel zur Realisierung einer Drehrichtungsumkehr vorgesehen sind.

24. Getriebebaueinheit (1) nach Anspruch 23, **dadurch gekennzeichnet, dass** die Mittel einen Wendeschaltsatz umfassen.

25. Getriebebaueinheit (1) nach einem der Ansprüche 1 bis 24, **dadurch gekennzeichnet, dass** die erste und/oder zweite schaltbare Kupplung (21, 22) als reibschlüssige oder synchron schaltbare Kupplungen ausgeführt sind.

26. Getriebebaueinheit (1) nach einem der Ansprüche 1 bis 25, **dadurch gekennzeichnet, dass** dem Getriebeeingang (E) ein Anfahrelement (48) vorgeschaltet ist.

27. Getriebeanordnung (1) nach Anspruch 26, **dadurch gekennzeichnet, dass** das Anfahrelement (48) als hydrodynamischer Drehzahl-/Drehmomentwandler oder hydrodynamische Kupplung ausgeführt ist.

28. Getriebeanordnung nach Anspruch 27, **dadurch gekennzeichnet, dass** dem Anfahrelement (48) eine Überbrückungskupplung zugeordnet ist.

29. Getriebeanordnung (1) nach Anspruch 26, **dadurch gekennzeichnet, dass** das Anfahrelement (48) als Lamellenkupplung ausgeführt ist.

## Claims

1. A transmission module (1), especially a multirange transmission (2),
1.1 with a transmission input (E) and a transmission output (A);
1.2 with two superposition gears (9, 10) which are configured as triple-shaft planetary gears (11, 12) and each comprise a sun wheel (25, 27), an internal gear (24, 28), a planet carrier (23, 26) and planet wheels, with the individual shafts each being formed by the sun wheels (25, 27) internal gears (24, 28), planet carriers (23, 26) or the elements which are torsionally rigidly connected with the same;
1.3 a first shaft (13) of the first superposition gear (9) is torsionally rigidly connected with the transmission input (E);
1.4 a second shaft (14) of the first superposition gear (9) and a second shaft (17) of the second superposition gear (10) are connectable in an at least indirect and torsionally rigid manner with the transmission output (A);
1.5 an infinitely variable transmission in the form of a traction drive (6) is arranged between the third shafts (15, 18) of first and second superposition gear (9, 10);
1.6 with means for controlling the transmission ratio on the traction drive (6);
1.7 the coupling between the individual superposition gears (9, 10) and the infinitely variable transmission (5) occurs via a connecting gear (39, 40) each, comprising a speed step (19, 20);
**characterized by** the following features:
1.8 the first shaft (16) of the second superposition gear (10) can be connected via a first clutch (21) optionally with the transmission input (E);
1.9 the second shaft (14) of the first superposition gear (9) and the third shaft (18) of the second superposition gear (10) can be optionally connected with the transmission output (A) via at least one further second switchable clutch (22).

2. A transmission module (1) according to claim 1, **characterized in that** the second shaft (14) of the first superposition gear (9) is connected in a torsionally rigid manner with the third shaft (18) of the second superposition gear (10).

3. A transmission module (1) according to one of the claims 1 or 2, **characterized in that** the individual connecting gear (19, 20) is formed by a reversing gear.

4. A transmission module (1) according to claim 3, **characterized in that** the individual connecting gear (19, 20) is formed by a spur wheel step (36), comprising an even number of mutually combing spur wheels (29, 30, 37, 38).

5. A transmission module (1) according to claim 4, **characterized in that** one of the mutually combing spur wheels (29, 30, 37, 38) of the individual connecting gears (19, 20) is formed by the third shaft (15) of the first superposition gear (9) and/or the third shaft (18) of the second superposition gear (10) or forms a modular unit with the same.

6. A transmission module (1) according to one of the claims 1 to 5, **characterized in that** the sun wheel (27) of the second superposition gear (10) is configured depending on the overall transmission spread to be achieved.

7. A transmission module (1) according to one of the claims 1 to 6, **characterized in that** the first superposition gear (9) is designed for the multiplication of the infinitely variable transmission (5) which corresponds to the theoretically maximum possible transmission ratio on the infinitely variable transmission.

8. A transmission module (1) according to one of the claims 1 to 7, **characterized in that** the sun wheel (25) of the first superposition gear (9) is **characterized** with respect to its dimensioning by a reference circle diameter which is smaller in a range of including 2 to 2.6 than the one of the internal gear (24) of the first superposition gear (9).

9. A transmission module (1) according to one of the claims 1 to 8, **characterized in that** the sun wheel (27) of the second superposition gear (10) is **characterized** with respect to its dimensioning by a reference circle diameter which is smaller in a range of including 2 to 2.6 times than the one of the internal gear (28).

10. A transmission module (1) according to one of the claims 1 to 9, **characterized by** the following features:
10.1 the first shaft (13) of the first superposition gear (9) and the first shaft (16) of the second superposition gear (10) are each formed by the planet carrier (23) of the first planetary gear (11) or by the planet carrier (26) of the second planetary gear (12) or by elements torsionally rigidly connected with the same;
10.2 the second shaft (14) of the first superposition gear (9) is formed by the sun wheel (25) of the first planetary gear (11) and the second shaft (17) of the second superposition gear (10) by the internal gear (28) of the second planetary gear (12);
10.3 the third shaft (15) of the first superposition gear (9) is formed by the internal gear (24) of the first planetary gear (11) and the third shaft (18) of the second planetary gear (12) is formed by the sun wheel (27) or an element torsionally rigidly connected with the same.

11. A transmission module (1) according to claim 10, **characterized in that** the sun wheel (25) of the first planetary gear (11) and the sun wheel (27) of the second planetary gear (12) are mutually connected in a torsionally rigid manner by way of a hollow shaft.

12. A transmission module (1) according to claim 11, **characterized in that** the coupling between transmission input (E) and first shaft (16) of the superposition gear (10) occurs by way of a shaft which is torsionally rigidly connected with the planet carrier (23) of the first planetary gear (11) and guided through the hollow shaft.

13. A transmission module (1) according to one of the claims 10 to 12, **characterized by** the following features:
13.1 the first spur wheel of the first connecting gear is formed by the internal gear (24) of the first superposition gear (9);
13.2 the second connecting gear (20) is formed by a spur wheel (38) coupled in a torsionally rigid manner with the third shaft (18) arranged as a hollow shaft and by a further spur wheel (37) which is connected in a torsionally rigid manner with the infinitely variable transmission (5).

14. A transmission module (1) according to one of the claims 1 to 13, **characterized in that** the infinitely variable transmission (5) is arranged as a non-positive traction drive (6) and the traction means (34) is formed by a belt or a chain.

15. A transmission module (1) according to one of the claims 1 to 14, **characterized in that** means for slip-free coupling of the traction means (34) to the speed of the transmission input (E) are provided.

16. A transmission module (1) according to claim 15, **characterized in that** the means for adjusting the revolving speed of the traction means (34) to the speed of the transmission input (E) comprise a transfer element (42) which is coupled at least indirectly with the transmission input (E) and can be brought into a non-positive operative connection with the traction means (34).

17. A transmission module (1) according to claim 16, **characterized in that** the traction means (34) comprises a profiling (44) around the outside circumference (43) which can be brought into engagement with a complementary profiling (45) on the outside circumference (46) of the transfer member (42).

18. A transmission module (1) according to claim 17, **characterized in that** the transfer member (42) is arranged coaxially to the transmission input shaft (E) or parallel to the same and a pivoting gear (48) is provided for pivoting the disk arrangements (33, 35) of the infinitely variable transmission (5) and the transfer member (42).

19. A transmission module (1) according to claim 17, **characterized in that** the transfer member (42) is arranged coaxially to and in a torsionally rigidly manner with the transmission input shaft (E) or parallel to the same, and the traction means (34) is associated with a displaceably or pivotably held tensioning apparatus (47) for maintaining the tension.

20. A transmission module (1) according one of the claims 1 to 19, **characterized in that** the means for controlling the gear transmission ratio on the traction drive (6) comprise actuating elements for adjusting the distances of the individual disk arrangements (33, 35).

21. A transmission module (1) according to one of the claims 1 to 20, **characterized in that** a gear transmission ratio can be set of 1 to 2 to 3, preferably 1 to 2.5, between the third shaft of the first superposition gear (9) and the third shaft (18) of the second superposition gear (10), or the gear transmission ratio between the two individual disk arrangements can be set at a ratio of 1 to 2 to 3.

22. A transmission module (1) according to one of the claims 1 to 21, **characterized in that** the input (E) is connected with a switchable starting unit (48).

23. A transmission module (1) according to one of the claims 1 to 22, **characterized in that** means are additionally provided for realizing a reversal of rotation direction.

24. A transmission module (1) according to claim 23, **characterized in that** the means comprise a reversing change unit.

25. A transmission module (1) according to one of the claims 1 to 24, **characterized in that** the first and/or second switchable clutch (21, 22) are arranged as frictionally engaged or synchronously switchable clutches.

26. A transmission module (1) according to one of the claims 1 to 25, **characterized in that** a starting element (48) is provided connected in series to the transmission input (E).

27. A transmission arrangement (1) according to claim 26, **characterized in that** the starting element (48) is arranged as a hydrodynamic speed/torque converter or a hydrodynamic coupling.

28. A transmission arrangement (1) according to claim 27, **characterized in that** the starting element (48) is associated with a lock-up clutch.

29. A transmission arrangement (1) according to claim 26, **characterized in that** the starting element (48) is arranged as a multiple-disk clutch.

## Revendications

1. Unité de boîte de vitesses (1), en particulier boîte à doubleur de gamme (2),
1.1 avec une entrée d'engrenage (E) et une sortie d'engrenage (A) ;
1.2 avec deux engrenages à superposition (9, 10) conçus comme des trains planétaires (11, 12) à trois arbres comprenant chacun une roue solaire (25, 27), une couronne (24, 28), une traverse (23, 26) et des roues planétaires, les différents arbres étant formés chacun par les roues solaires (25, 27), les couronnes (24, 28), les traverses (23, 26) ou les éléments reliés de manière solidaire en rotation avec celles-ci ;
1.3 un premier arbre (13) du premier engrenage à superposition (9) est relié de manière solidaire en rotation à l'entrée de l'engrenage (E) ;
1.4 un deuxième arbre (14) du premier engrenage à superposition (9) et un deuxième arbre (17) du deuxième engrenage à superposition (10) peuvent être reliés au moins indirectement de façon solidaire en rotation à la sortie de l'engrenage (A) ;
1.5 il est prévu entre les troisièmes arbres (15, 18) du premier engrenage à superposition (9) et du deuxième (10) un transmission à réglage continu (5) constituée par une transmission à moyen de traction (6) ;
1.6 avec des moyens pour contrôler le rapport de multiplication de la transmission à moyen de traction (6) ;
1.7 le couplage entre les différents engrenages à superposition (9, 10) et la transmission à réglage continu (5) est réalisé par un engrenage de liaison (39, 40) comprenant un étage de multiplication (19, 20) ;
**caractérisé en ce que** :
1.8 le premier arbre (16) du deuxième engrenage à superposition (10) peut être relié sélectivement par un premier embrayage (21) à l'entrée de l'engrenage (E) ;
1.9 le deuxième arbre (14) du premier engrenage à superposition (9) et le troisième arbre (18) du deuxième engrenage à superposition (10) peuvent être reliés sélectivement par un deuxième embrayage (22) à la sortie de l'engrenage (A).

2. Unité de boîte de vitesses (1) selon la revendication 1, **caractérisée en ce que** le deuxième arbre (14) du premier engrenage à superposition (9) est relié de manière solidaire en rotation au troisième arbre (18) du deuxième engrenage à superposition (10).

3. Unité de boîte de vitesses (1) selon l'une quelconque des revendications 1 ou 2, **caractérisée en ce que** chaque engrenage de liaison (19, 20) est formé par un engrenage inverseur.

4. Unité de boîte de vitesses (1) selon la revendication 3, **caractérisée en ce que** chaque engrenage de liaison (19, 20) est formé par un étage de roues droites (36) comprenant un nombre pair de roues droites (29, 30, 37, 38) engrenant les unes avec les autres.

5. Unité de boîte de vitesses (1) selon la revendication 4, **caractérisée en ce que** l'une des roues droites (29, 30, 37, 38) engrenant les une avec les autres de chaque engrenage de liaison (19, 20) est formée par le troisième arbre (15) du premier engrenage à superposition (9) et/ou le troisième arbre (18) du deuxième engrenage à superposition (10) ou forme avec celui-ci une unité constructive.

6. Unité de boîte de vitesses (1) selon l'une quelconque des revendications 1 à 5, **caractérisée en ce que** la roue solaire (27) du deuxième engrenage à superposition (10) est dimensionnée en fonction de la plage de rapports totale à obtenir.

7. Unité de boîte de vitesses (1) selon l'une quelconque des revendications 1 à 6, **caractérisée en ce que** le premier engrenage à superposition (9) est dimensionné avec le rapport de multiplication de la transmission à réglage continu (5) correspondant au rapport de transmission maximal théoriquement possible sur la transmission à réglage continu.

8. Unité de boîte de vitesses (1) selon l'une quelconque des revendications 1 à 7, **caractérisée en ce que** la roue solaire (25) du premier engrenage à superposition (9) est **caractérisée en ce** qui concerne son dimensionnement par un diamètre primitif de référence plus petit de 2 à 2,6 fois inclus que celui de la couronne (24) du premier engrenage à superposition (9).

9. Unité de boîte de vitesses (1) selon l'une quelconque des revendications 1 à 8, **caractérisée en ce que** la roue solaire (27) du deuxième engrenage à superposition (10) est **caractérisée en ce** qui concerne son dimensionnement par un diamètre primitif de référence plus petit de 2 à 2,6 fois inclus que celui de la couronne (28).

10. Unité de boîte de vitesses (1) selon l'une quelconque des revendications 1 à 9, **caractérisée en ce que** :
10.1 le premier arbre (13) du premier engrenage à superposition (9) et le premier arbre (16) du deuxième engrenage à superposition (10) sont formés chacun par la traverse (23) du premier train planétaire (11) ou par la traverse (26) du deuxième train planétaire (12) ou par les éléments reliés à celle-ci de manière solidaire en rotation ;
10.2 le deuxième arbre (14) du premier engrenage à superposition (9) est formé par la roue solaire (25) du premier train planétaire (11) et le deuxième arbre (17) du deuxième engrenage à superposition (10) par la couronne (28) du deuxième train planétaire (12) ;
10.3 le troisième arbre (15) du premier engrenage à superposition (9) est formé par la couronne (24) du premier train planétaire (11) et le troisième arbre (18) du deuxième train planétaire (12) par la roue solaire (27) ou par un élément relié à celle-ci de manière solidaire en rotation.

11. Unité de boîte de vitesses (1) selon la revendication 10, **caractérisée en ce que** la roue solaire (25) du premier train planétaire (11) et la roue solaire (27) du deuxième train planétaire (12) sont reliées entre elles de manière solidaire en rotation par un arbre creux.

12. Unité de boîte de vitesses (1) selon la revendication 11, **caractérisée en ce que** le couplage entre l'entrée de l'engrenage (E) et le premier arbre (16) du deuxième engrenage à superposition (10) est réalisé par un arbre solidaire en rotation de la traverse (23) du premier train planétaire (11) et passe à travers l'arbre creux.

13. Unité de boîte de vitesses (1) la selon l'une quelconque des revendications 10 à 12, **caractérisée en ce que** :
13.1 la première roue droite du premier engrenage de liaison est formée par la couronne (24) du premier engrenage à superposition (9) ;
13.2 le deuxième engrenage de liaison (20) est formé par une roue droite (38) couplée de manière solidaire en rotation au troisième arbre (18) conçu comme un arbre creux et par une autre roue droite (37) qui est reliée de manière solidaire en rotation à la transmission à réglage continu (5).

14. Unité de boîte de vitesses (1) selon l'une quelconque des revendications 1 à 13, **caractérisée en ce que** la transmission à réglage continu (5) est construite comme une transmission à moyen de traction (6) à friction et le moyen de traction (34) est formé par une courroie ou une chaîne.

15. Unité de boîte de vitesses (1) selon l'une quelconque des revendications 1 à 14, **caractérisée en ce qu'**il est prévu des moyens pour le couplage sans patinage du moyen de traction (34) à la vitesse de rotation de l'entrée de l'engrenage (E).

16. Unité de boîte de vitesses (1) selon la revendication 15, **caractérisée en ce que** les moyens pour faire coïncider la vitesse de circulation du moyen de traction (34) à la vitesse de rotation de l'entrée de l'engrenage (E) comprennent un organe de transmission (42) pouvant être couplé au moins indirectement à l'entrée de l'engrenage (E) et pouvant être mis en liaison active par friction avec le moyen de traction (34).

17. Unité de boîte de vitesses (1) selon la revendication 16, **caractérisée en ce que** le moyen de traction (34) présente sur sa circonférence extérieure (43) un profilage (44) continu qui peut être mis en prise avec un profilage (45) complémentaire sur la circonférence extérieure (46) de l'organe de transmission (42).

18. Unité de boîte de vitesses (1) selon la revendication 17, **caractérisée en ce que** l'organe de transmission (42) est coaxial de l'arbre d'entrée de l'engrenage (E) ou parallèle à celui-ci et il est prévu pour maintenir la tension dans le moyen de traction (34) un engrenage pivotant (48) pour faire pivoter la disposition de disques (33, 35) de la transmission à réglage continu (5) et l'organe de transmission (42).

19. Unité de boîte de vitesses (1) selon la revendication 17, **caractérisée en ce que** l'organe de transmission (42) est coaxial de l'arbre d'entrée de l'engrenage (E) et solidaire en rotation de celui-ci ou parallèle à celui-ci et un dispositif de tension (47) supporté de manière coulissante ou pivotante est associé au moyen de traction (34) pour maintenir la tension.

20. Unité de boîte de vitesses (1) selon l'une quelconque des revendications 1 à 19, **caractérisée en ce que** les moyens pour contrôler le rapport de multiplication sur la transmission à moyen de traction (6) comprennent des moyens de réglage pour l'ajustement de la distance entre les différentes dispositions de disques (33, 35).

21. Unité de boîte de vitesses (1) selon l'une quelconque des revendications 1 à 20, **caractérisée en ce qu'**il est prévu entre le troisième arbre du premier engrenage à superposition (9) et le troisième arbre (18) du deuxième engrenage à superposition (10) un rapport de multiplication réglable de 1 à 2-3, de préférence de 1 à 2,5, ou que la multiplication entre les deux dispositifs de disques est réglable à un rapport de 1 à 2-3.

22. Unité de boîte de vitesses (1) selon l'une quelconque des revendications 1 à 21, **caractérisée en ce que** l'entrée (E) est reliée à une unité de démarreur (48) pouvant être commutée.

23. Unité de boîte de vitesses (1) selon l'une quelconque des revendications 1 à 22, **caractérisée en ce qu'**il est prévu en outre des moyens pour réaliser une inversion du sens de rotation.

24. Unité de boîte de vitesses (1) selon la revendication 23, **caractérisée en ce que** les moyens comprennent un inverseur.

25. Unité de boîte de vitesses (1) selon l'une quelconque des revendications 1 à 24, **caractérisée en ce que** le premier et/ou le deuxième embrayage (21, 22) sont conçus comme des embrayages à friction ou synchrones.

26. Unité de boîte de vitesses (1) selon l'une quelconque des revendications 1 à 25, **caractérisée en ce qu'**un élément de démarreur (48) est monté en amont de l'entrée de l'engrenage (E).

27. Dispositif d'engrenage (1) selon la revendication 26, **caractérisé en ce que** l'élément de démarreur (48) est conçu comme un convertisseur de vitesse en couple de rotation hydrodynamique ou comme un accouplement hydrodynamique.

28. Dispositif d'engrenage selon la revendication 27, **caractérisé en ce qu'**un engrenage à prise directe est associé à l'élément de démarreur (48).

29. Dispositif d'engrenage (1) selon la revendication 26, **caractérisé en ce que** l'élément de démarreur (48) est conçu comme un embrayage à disques multiples.
